# EUROPEAN PATENT APPLICATION

(11) **EP 1 551 067 A1**
(43) Date of publication of application: **06.07.2005**
(21) Application number: 03736147.4
(22) Date of filing: 11.06.2003
(51) Int. Cl.: H01M 2/02

(54) **BATTERY**

(30) Priority: 13.06.2002 JP 2002172181
(71) Applicant: GS Yuasa Corporation, Kyoto (JP)
(72) Inventor: KAWADA, Hiroyasu, c/o YUASA CORPORATION, Takatsuki-shi, Osaka 569-1115 (JP)
(74) Representative: DTS Zürich
(86) International application number: PCT/JP2003/007388
(87) International publication number: WO 2003/107457

(57) **Abstract**

An object is to limit temperature rise in a battery, which operates at ambient temperature, due to heat generated at an outside heat source mounted close to the battery. A hollow space is formed in a wall of a battery container or a heat insulating material is mixed in a resin of the battery container, thereby enhancing the heat insulating effect of the battery container. Of the outer surface of the battery container, a portion adapted to be in contact with a battery-supporting member is provided with projecting extensions or protuberances and depressions so that heat generated outside of the battery is prevented from being transferred by conduction. A shield member is disposed on the outer surface of the battery container so that heat transfer to the battery by radiation is prevented.

## Description

### FIELD OF THE INVENTION

The present invention relates to a battery mainly using, as electrolyte, a dilute sulfuric acid, a caustic alkaline solution, a nonaqueous solution or the like, which operates at ambient temperature (a battery that operates at ambient temperature is herein meant a battery that is capable of operating at ambient temperature or lower and is intended to be generally operated at ambient temperature), and more particularly a battery to be mounted in proximity to a heat generating source, such as in an engine room of an automobile.

### BACKGROUND OF THE INVENTION

For example, a lead-acid storage battery for automobile use is mounted inside the hood. An engine as a heat generating source is also mounted inside the hood. Heat generated at the heat generating source is transferred by radiation or conduction into the battery, thereby increasing the temperature of the battery.

Increase in temperature of the battery makes electrolyte easy to evaporate so that the amount of electrolyte loss in the battery may be increased. For a lead-acid storage battery, as the amount of electrolyte is decreased, the concentration of sulfuric acid of electrolyte is increased. This may lead to shortening the serviceable period of the battery or disable the battery to discharge a given level of electricity when the solution level is lowered and hence battery plates are exposed.

As another disadvantage, the amount of self-discharge is increased as the temperature of the battery is increased.

Conventionally, no attempts were made to positively prevent heat transfer from an outside heat source to a battery. Therefore, for a monoblock-type lead-acid storage battery for automobile use, the cells at the both ends of the battery, to which heat from the outside is easy to conduct, increase their temperatures and cause a great amount of electrolyte loss as compared with inner part located cells. This leads to a drawback, causing variation in battery performance among the cells and great deterioration of the cells of the both ends of the battery.

The present invention has been conceived in consideration of the above drawbacks. It is an object of the present invention to provide for a prevention means for preventing heat generated at an outside heat source from being transferred by radiation or conduction into the battery.

### SUMMARY OF THE INVENTION

A battery of the present invention is characterized in that it includes a battery container made of synthetic resin, wherein a wall of the battery container has a hollow space therein or a plate made of synthetic resin with a hollow space therein is attached to an outer surface of the battery container. This battery can prevent heat generated at an outside heat source from being transferred into the battery by conduction.

A battery of the present invention is characterized in that it includes a battery container made of synthetic resin and a plate made of synthetic resin, in which the plate is attached to an outer surface of the battery container so as to have a hollow space therebetween. This battery can prevent heat generated at an outside heat source from being transferred into the battery by conduction.

A battery of the present invention is characterized in that it includes a battery container, in which the battery container is made of synthetic resin and a heat insulating material is mixed in the synthetic resin, or a heat insulating material is mixed in a plate made of synthetic resin, in which the plate is attached to an outer surface of the battery container. This battery can prevent heat generated at an outside heat source from being transferred into the battery by conduction.

A battery of the present invention is characterized in that it includes a battery container made of synthetic resin, in which projecting extensions or protuberances and depressions are provided on a portion of an outer surface of the battery container, which portion being adapted to be in contact with a battery-mounting member. This battery can prevent heat from being transferred to a body of the battery container.

A battery of the present invention is characterized in that it includes a battery container and a shield member disposed outside of the battery container so as to block radiation heat transfer. This battery can prevent radiation heat transfer from an outside heat source to the battery container.

### BRIEF DESCRIPTION OF THE DRAWINGS

FIG. 1 is an appearance of a battery with a side wall sectioned, according to one embodiment of the present invention.
FIGS. 2A and 2B each illustrate a schematic appearance of the battery with a side wall sectioned, according to one embodiment of the present invention.
FIG. 3 is a view illustrating an appearance of a battery container according to one embodiment of the present invention.
FIG. 4 is a view illustrating an appearance of a battery container according to one embodiment of the present invention.
FIG. 5 is a view illustrating an appearance of a battery container according to one embodiment of the present invention.

### BEST MODE FOR CARRYING OUT THE INVENTION

Now, the description will be made for an embodiment of the present invention by taking for example a lead·acid storage battery for automobile use, which produces a remarkable effect.

According to a first embodiment of the present invention, a battery container is provided with a wall that itself has heat insulation capability, or has a heat insulating material attached to an outer surface of the battery container by such as bonding or fitting engagement so as to prevent heat generated outside of the battery container from being conducted into the battery. For this, specifically, a hollow space is formed in a wall of the battery container made of synthetic resin or formed in a plate made of synthetic resin disposed on the outer surface of the battery container. Various means such as bonding or a structure enabling fitting engagement may be employed to achieve attachment of an insulating material.

Preferably, powdered insulating material is sealed in the hollow space.

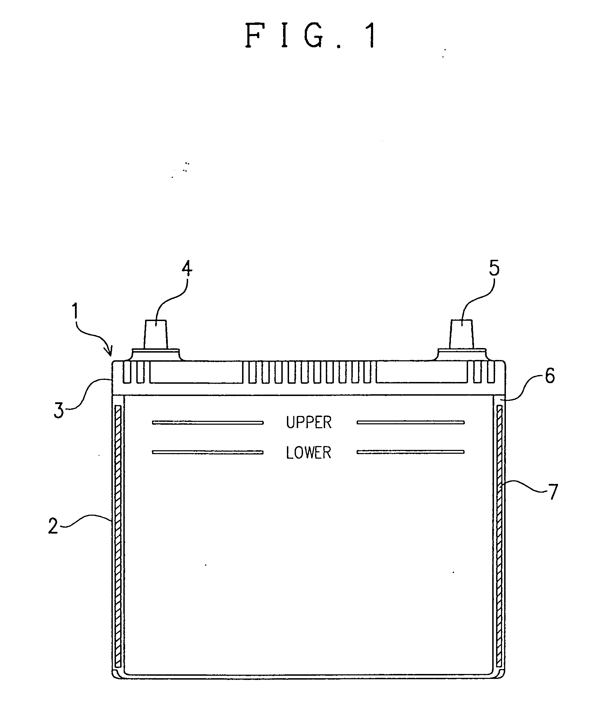

FIG. 1 is a view illustrating one form of a lead-acid storage battery 1 according to the first embodiment of the present invention. A battery container is made up of a battery case 2 having a side wall and a bottom wall, and a lid 3 acting as a top wall. Reference numerals 4 and 5 respectively represent a positive terminal and a negative terminal. The battery case 2 and the lid 3 are made of ABS resin, which is a copolymer of acrylonitrile, butadiene and styrene, or polypropylene (PP) resin.

Of the battery case 2 and the lid 3, the battery case 2 directly contacts a plate pack and electrolyte and therefore it is effective to enhance the insulating capability of the wall surface of the battery case 2.

FIG. 1 illustrates a side wall 6 of the battery case 2 in section.

The side wall 6 defines therein a hollow space 7, as illustrated in FIG. 1.

Gas (generally air), or powdered insulating material such as perlite or silica aerogel is sealed in the hollow space 7 so as to prevent the hollow space from being crushed by outside force. The thus provided hollow space enhances the heat insulating capability of the side wall.

In FIG. 1, the hollow space 7 is formed only in the side wall of the battery case 2, while it is also effective to form a hollow space in the bottom wall of the battery case 2.

In FIG. 1, one large continuously formed hollow space is illustrated. Alternatively, it is possible to employ a wall made of synthetic resin by using plastic foam in which minute hollow spaces are distributed.

As plastic foam for the battery container, hard foam is suitable. Accordingly, it is possible to apply hard foam such as styrene resin and vinyl chloride resin, as well as the ABS resin and the PP resin.

In another embodiment associated with the first embodiment, a synthetic resin plate having a hollow space as shown in the above embodiment is attached to an outer surface of a battery container by such as bonding or fitting engagement. As such, various attaching means such as bonding or a structure enabling fitting engagement may be employed. For example, it is possible to employ an arrangement where the outer surface of the battery container has grooves or recesses into which a resin plate or the like is fitted.

For the synthetic resin plate, the same material used for the synthetic-resin-made battery case is applicable. While the plate thickness is not necessarily limited to a specific thickness, a plate having a large thickness can produce a high insulating effect.

However, a thickened insulating plate material may cause a problem of occupying a great space. In consideration of this, the thickness of a plate material is preferably 1 mm - 10 mm.

When a heat insulating material is sealed in the hollow space, the insulating capability can be further enhanced.

This insulating material sealed in the hollow space can maintain the strength of the synthetic resin plate.

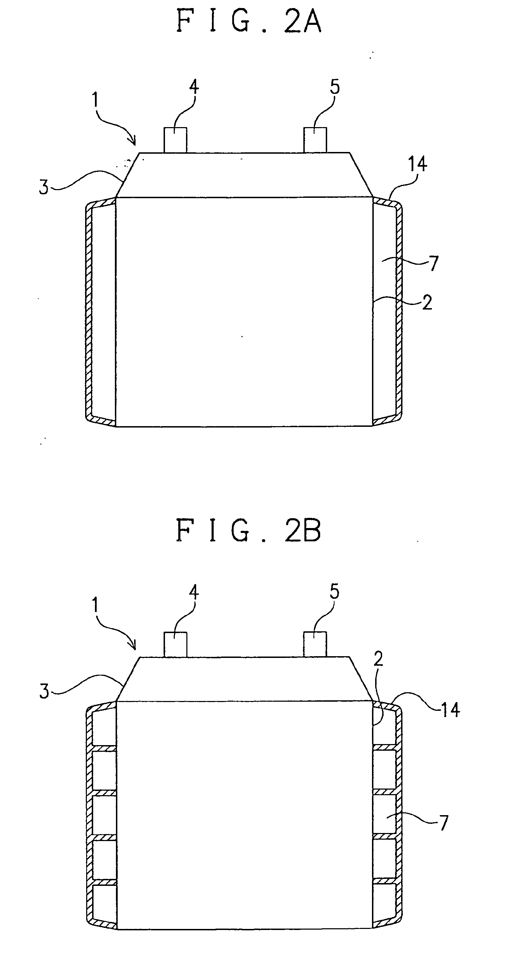

Another embodiment associated with the first embodiment is illustrated in FIGS. 2.

A battery as illustrated in FIGS. 2A and 2B has a synthetic resin plate 14 mounted thereon by such as bonding or fitting engagement in such a manner as to have a hollow space along the outer surface of the battery container. The synthetic resin plate 14 may have projecting extensions, or protuberances and depressions on the surface thereof contacting the wall of the battery container, as illustrated in FIG. 2B. The shape or number of the projecting extensions or protuberances and depressions are not necessarily limited to specific ones. These projecting extensions, or protuberances and depressions can maintain the strength of the synthetic resin plate.

When a heat insulating material is sealed in the hollow space, the heat insulating capability can further be enhanced.

In another embodiment associated with the first embodiment, a heat insulating material may be mixed in a synthetic resin of the battery container of FIG. 1, or in a synthetic resin of a heat-insulating synthetic resin plate which is mounted to the outer surface of the battery container by such as bonding or fitting engagement. For example, it is possible to employ a mounting means such as snap-fitting, which is realized by recesses formed in the outer surface of the battery container, into which a resin plate having a heat insulating material in a synthetic resin thereof is snap fitted.

The heat insulating material may be in powdered or fibrous form. While a material is not necessarily limited to a specific one, know materials such as alumina hollow ball, zirconia hollow ball, diatomaceous earth and calcium silicate, as well as the perlite and the silica aerogel may be used as powdered heat insulating material. For a good insulating performance, it is preferable to add 30 ·60 volume % of a heat insulating material to the aforesaid resin.

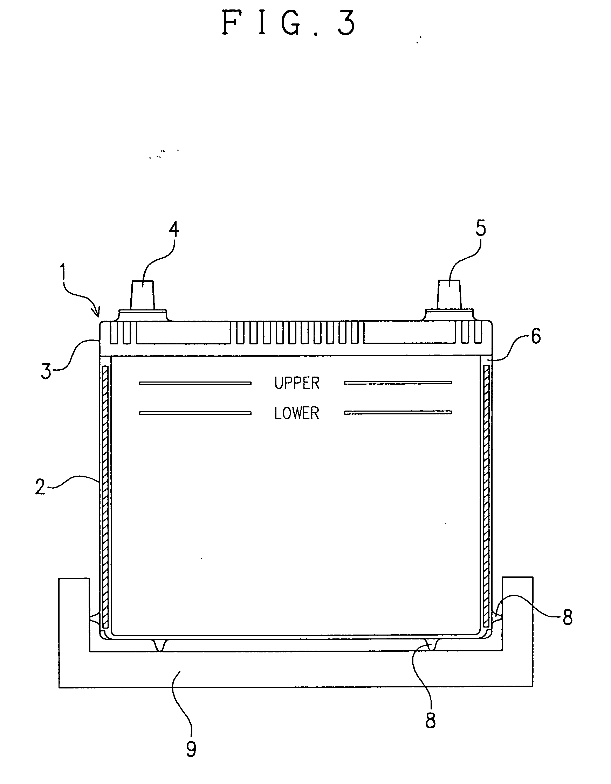

Now, the description will be made for a second embodiment with reference to FIG. 3.

According to the second embodiment of the present invention, heat conduction through the outer surface of the battery container is prevented. Specifically, a contacting area of the battery container with a battery-mounting base is minimized by providing projecting extensions, or protuberances and depressions to the outer surface of the battery container.

FIG. 3 illustrates an outer surface of a lead-acid battery according to the second embodiment of the present invention. Projecting extensions 8 provided on a bottom surface and lower portions of a side wall of the battery case 2 minimize a contacting area of the battery case 2 with a battery-mounting base 9. This prevents heat from conducting to the battery case 2 through the base.

Herein, the description was made by taking for example a case where the projecting extensions are provided on the outer surface of the battery container. Protuberances and depressions in place of the projecting extensions can also decrease the contacting area of the battery container with the base. The number or shape of the projecting extensions, protuberances and depressions, etc. are not necessarily limited to specific ones. It is preferable to employ an arrangement that provides such a degree of the mechanical strength as to secure a predetermined space between the battery container and the battery-mounting base, while minimizing the contacting area of the battery container with the battery-mounting base.

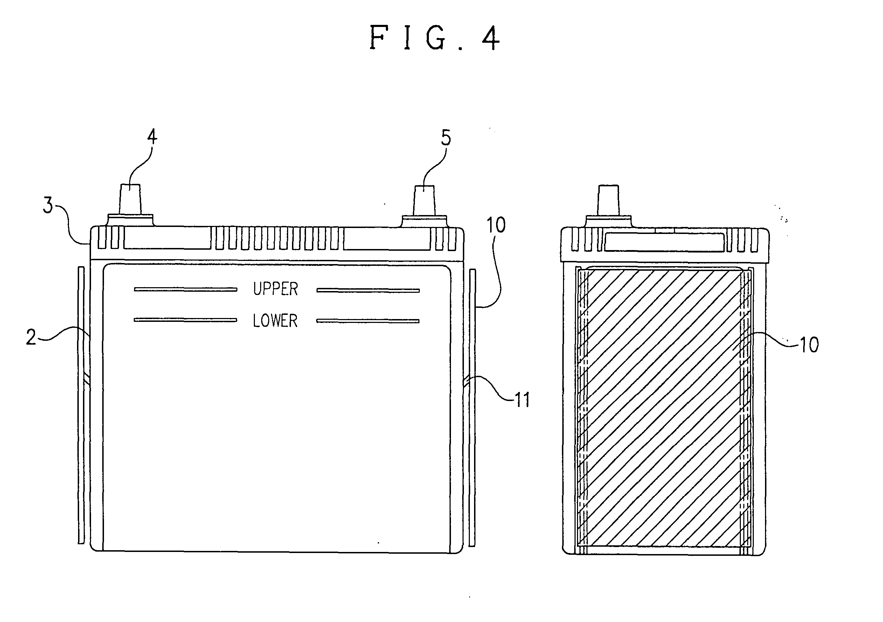

Now, the description will be made for a third embodiment with reference to FIG. 4.

According to the third embodiment of the present invention, heat transferred by radiation from a heat source to the battery case 2 is prevented. For this, a shield member that blocks radiation heat transfer is provided between a battery container and a heat source. As illustrated in FIG. 4, in this embodiment, a shield member 10 made of metal is disposed so as to face the direction from which radiation heat comes.

The shield member is of a plate-like shape and fixed to the battery container through a support member 11 so as to extend along a side wall of the battery container with a clearance therebetween.

As the shield member 10, it is possible to employ a plate of metal such as aluminium, stainless steel or nickel, a plate of synthetic resin such as polypropylene or other white opaque resin or a plate of ceramics such as alumina, or a composite material that is formed with a metal layer such as aluminium by vapor-depositing or applying foil to a synthetic resin plate or a ceramic plate by such as bonding or fitting engagement. This shield member may be attached to the surface of the battery container by such as bonding or fitting engagement. As attaching means, various means may be employed as described above.

The shield member preferably has a smooth surface for improved efficiency in reflecting radiation heat.

According to another preferable form of the third embodiment of the present invention, the battery container is designed to give a radiation-heat shielding function to a radiation·heat receiving portion of the outer surface of the battery container.

Specifically, metal foil is attached to the outer surface of the battery container by such as bonding or fitting engagement, or a resin plate having a metal layer such as a metal foil, a metal sprayed film or a vapor-deposited film is attached to the outer surface of the battery container by such as bonding or fitting engagement.

The metal layer is proper as a shield member to be directly placed on the surface of the battery container since it is flexible and therefore unlikely to be damaged due to deformation of the battery container, and provides an excellent heat-shielding performance.

Metal is not necessarily limited to a specific one, while aluminium is suitable because it is of a light weight and provides an excellent radiation-heat reflection performance. However, a shield member of metal is likely to be corroded when electrolyte touches it. Aluminium also has a shortcoming that it has a poor mechanical strength and therefore is easy to be damaged.

Accordingly, in a case where a shield member made of a metal layer is employed, it is preferable to coat the surface of a metal shield member with a transparent protecting film in order to overcome the shortcoming.

Specifically, a metal layer is first formed on the outer surface of a battery case of synthetic resin by vapor-depositing or applying foil by such as bonding, and then the surface of the metal layer is coated with a transparent resin film such as polyester having a thickness of several tens µm to several hundreds µm. Or, a vapor deposited film formed by vapor·depositing aluminium to the surface of a polyester film, or a laminate film formed by laminating aluminium foil to a polyester film or a nylon film is attached to the outer surface of the battery container by such as bonding or fitting engagement, with an aluminium layer of the vapor-deposited film or the laminate film held in contact with the wall of the battery container.

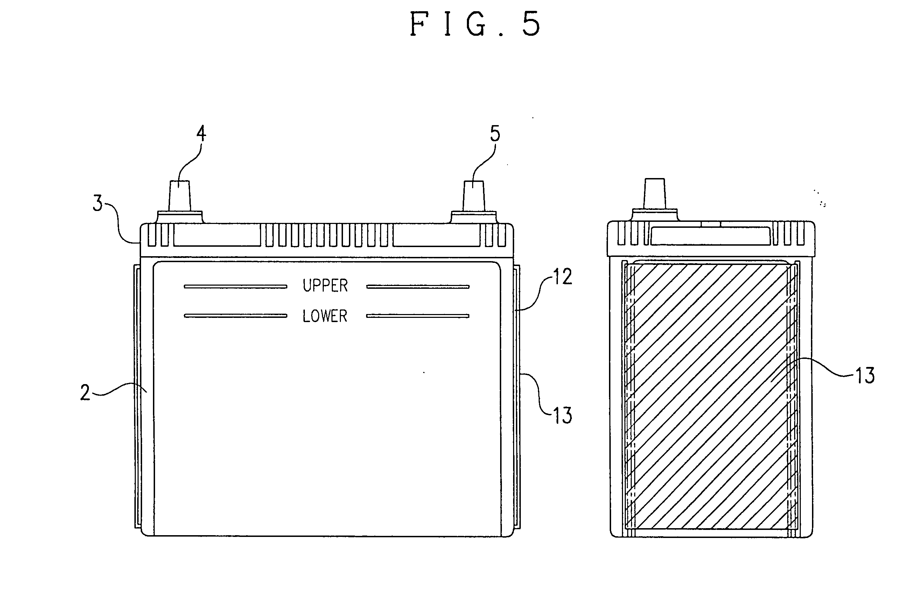

FIG. 5 is a view illustrating an embodiment, in which an aluminium or other metal layer 12 as a shield member is formed on the surface of the battery case 2. A protection film 13 made of the aforesaid resin is formed on the wall of the battery case 2 by the aforesaid method so as to cover the metal layer 12 and the wall of the battery case 2. The metal layer 12, which is formed by the vapor-deposition or lamination, preferably has a thickness of 5 µm ·200 µm for ease of forming, while not limited to a specific thickness, as long as it has a capability to reflect radiation heat.

A shield member against the radiation heat is not required to be arranged entirely on the outer surface of the battery container, as long as it is arranged on the side to which heat is radiated. For a lead-acid battery, an alkaline battery or the like, the wall of the battery container is entirely or partially transparent or semi-transparent to provide an observation window through which the electrolyte level is observed. Accordingly, it is preferable to locate the synthetic resin plate, the heat insulating material and the shield member so as not to be overlapped with, for example, the electrolyte level observation window and hence not to hinder the observation of the electrolyte level.

The description was made for the above embodiments by taking for example a case where those embodiments are employed independently of each other. However, it is possible to simultaneously employ several embodiments to have various arrangements, such as an arrangement in which a synthetic resin plate is attached to the surface of a battery case by such as bonding or fitting engagement, and then a radiation-heat reflecting plate is attached to the outer surface of the synthetic resin plate by such as bonding or fitting engagement. This makes it possible to further enhance the effect of limiting temperature rise in a battery.

While the above description was made by taking for example a lead-acid battery for automobile use, the present invention is not necessarily limited to the lead-acid battery. For example, the present invention is also applicable to a lead-acid battery for a different use other than automobile use, or applicable to an alkaline battery or a lithium battery.

## Claims

1. A battery **characterized in that** it comprises a battery container made of synthetic resin, wherein a wall of the battery container has a hollow space therein or a plate made of synthetic resin with a hollow space therein is attached to an outer surface of the battery container.

2. A battery **characterized in that** it comprises a battery container made of synthetic resin and a plate made of synthetic resin, said plate being attached to an outer surface of the battery container so as to have a hollow space therebetween.

3. The battery according to any one of claims 1 and 2, wherein a heat insulating material is sealed in said hollow space.

4. A battery **characterized in that** it comprises a battery container, wherein the battery container is made of synthetic resin and a heat insulating material is mixed in said synthetic resin, or wherein a heat insulating material is mixed in a plate made of synthetic resin, said plate being attached to an outer surface of the battery container.

5. A battery **characterized in that** it comprises a battery container made of synthetic resin, wherein projecting extensions or protuberances and depressions are provided on a portion of an outer surface of the battery container, said portion being adapted to be in contact with a battery-mounting member.

6. A battery **characterized in that** it comprises a battery container and a shield member disposed outside of the battery container so as to block radiation heat transfer.

7. The battery according to claim 6, wherein the shield member includes a metal layer and a transparent protection film coated on a surface of the metal layer.
